# EUROPÄISCHE PATENTSCHRIFT

(11) **EP 2 860 714 B1**
(45) Veröffentlichungstag und Bekanntmachung des Hinweises auf die Patenterteilung: **19.08.2015**
(21) Anmeldenummer: 13187940.5
(22) Anmeldetag: 09.10.2013
(51) Int. Cl.: G08B 13/196, F16P 3/14, G06K 9/20, G01S 7/481, G01S 17/02

(54) **Optoelektronische Vorrichtung und Verfahren zur Überwachung eines Überwachungsbereichs**
Optoelectronic device and method for monitoring of a surveillance area
Dispositif optoélectronique et procédé de surveillance d'une zone de surveillance

(43) Veröffentlichungstag der Anmeldung: 15.04.2015
(73) Patentinhaber: SICK AG, 79183 Waldkirch (DE)
(72) Erfinder: Krämer, Joachim, 79249 Merzhausen (DE); Hammes, Dr., Markus, 79104 Freiburg (DE); Sigmund, Jörg, 79100 Freiburg (DE); Henkel, Olaf, 79276 Reute (DE); Zimmermann, Ralf, 79258 Hartheim (DE)
(74) Vertreter: Hehl, Ulrich

(56) Entgegenhaltungen:
- EP-A1- 1 927 957
- EP-A2- 2 560 366
- JP-A- 2001 333 423

## Beschreibung

Die Erfindung betrifft eine optoelektronische Vorrichtung und ein Verfahren zur Überwachung eines Überwachungsbereichs nach dem Oberbegriff von Anspruch 1 beziehungsweise 15.

Eine wichtige Überwachungsaufgabe ist die Absicherung eines Gefahrenbereiches, um das Eindringen unzulässiger Objekte oder Personen zu erkennen und daraufhin eine Gefahrenquelle abzusichern, beispielsweise eine überwachte Maschine abzustellen. Dazu werden berührungslose Sensoren eingesetzt, häufig auf einem optischen Prinzip basierende Sensoren wie Lichtgitter oder Laserscanner.

Mit der Weiterentwicklung der Digitaltechnik gewinnen für solche Anwendungen sichere Kameras eine zunehmende Bedeutung. Ein unmittelbares Erkennen des Objektes allerdings ist bei digitaler Bilderkennung aufwändig und kann unzuverlässig sein. Deshalb ist bekannt, im Überwachungsbereich und insbesondere an dessen Grenzen eine Reflektorfolie anzubringen und das Objekt indirekt als partielle Verdeckung beziehungsweise Abschattung der Reflektorfolie zu detektieren. Die Reflektorfolie wird dabei mit einem Muster aus reflektierenden und dunkeln Bereichen überzogen. So kann etwa dunkle Kleidung vor dem Reflektor, helle Kleidung oder Reflexmarken auf Arbeitskleidung dagegen vor dem nichtreflektierenden Hintergrund sicher erkannt werden.

Speziell zur Überwachung einer Durchgangsöffnung auf unzulässigen Durchtritt oder Durchgriff sind sichere Kamerasysteme bekannt, bei denen ein Reflektorstreifen an zwei Seiten eines rechteckigen Rahmenprofils angebracht wird und von einer Kamera aufgenommen wird, die in der den beiden Seiten gegenüberliegenden Ecke montiert ist. Die Kamera sieht den Reflektorstreifen in dieser Situation als im Wesentlichen eindimensionale Struktur lediglich mit der Breite des Reflektorstreifens. Durch diese geometrische Anordnung wird ein Schutzfeld aufgespannt, dessen Verletzung durch Objekteingriffe anhand von Unterbrechungen des auf dem Bildsensor der Kamera abgebildeten Reflektorstreifens erkannt wird. Eine solche sichere Kamera ist zusammen mit einem effizienten Auswertungsverfahren in der EP 1 927 957 A1 beschrieben.

Eine der Herausforderungen derartiger sicherer Kameras liegt in der gleichmäßigen Ausleuchtung des Reflektorstreifens. In der DE 199 644 92 B4 werden dazu mehrere LEDs kreisförmig um die Empfangsoptik der Kamera angeordnet. Das allein genügt aber noch nicht. Für eine gleichmäßigere Ausleuchtung als bei einfacher kreisförmiger Anordnung gemäß DE 199 644 92 B4 muss zusätzlich der Reflektorstreifen je nach Schutzfeldwinkel durch Verkippung der LEDs individuell angeleuchtet werden. Diese Verkippungen werden durch ein MID-Bauteil (Molded Interconnect Device) realisiert. Zusätzlich werden die LEDs mit unterschiedlich langen Beleuchtungszeiten angesteuert.

Ein MID-Bauteil ist im Vergleich zu einer gewöhnlichen Elektronikkarte teuer und sehr anfällig gegenüber Stößen. Denn die Leiterbahnen müssen per Siebdruck aufgebracht werden und sind anfällig gegenüber Rissen, Unterbrechungen und erhöhten Widerständen. Da weiterhin die LEDs nicht innerhalb der durch die Leiterkarte definierten Fläche liegen, ist auch die Positionierung der LEDs aufwändiger, und der thermische Kontakt zwischen Lichtquelle und Leiterplatte als potentielle Wärmesenke wird beeinträchtigt.

Die herkömmliche Ausleuchtung des Reflektorbereichs durch bloße Ausrichtung der LEDs ohne weitere Strahlformung ist zudem sehr inhomogen und dadurch ineffizient. Die Abstrahlcharakteristik einer LED hängt stark von den Details des Chips und der Vergussmasse ab. Sie wird jedoch recht gut durch eine Cosinusverteilung beschrieben, deren Strahlstärkemaximum in der Nähe der Flächennormalen liegt und die mit wachsendem Azimutwinkel stark abfällt. Die Beleuchtungscharakteristik entlang des Reflektorstreifens ergibt sich durch Superposition der einzelnen Intensitätsprofile der LEDs. Um eine möglichst gleichmäßige Beleuchtung auf dem Reflektorstreifen zu erreichen, ist erforderlich, die meisten LEDs mit ihrer Pulsdauer an die schwächste LED anzupassen. Durch diese Maßnahme wird aber die maximal mögliche Bestrahlungsleistung um ca. 20% verringert. Werden außerdem eine oder mehrere LEDs während des Betriebs zerstört, so wird ein Teil des Reflektorstreifens nur noch unzureichend beleuchtet. Dies äußert sich in einer Unterbrechung der Abbildung des Streifens, und das System schaltet mit Fehler ab. Die direkte Verwendung von LEDs ohne weitere Strahlformungsoptik hat noch den weiteren Nachteil, dass der Beleuchtungswinkel und damit die Größe des Empfangssignals durch die Abmessungen von LED und Empfangsobjektiv begrenzt wird.

Die Verwendung eines Reflektorbandes ist vorteilhaft, weil es, sofern retroreflektierend ausgebildet, nahezu die gesamte Energie zum Sensor reflektiert. Dadurch erscheint das Reflektorband im Kamerabild als deutlich gegenüber seinem Umfeld erhellte Linie, und ein eintretendes Objekt kann relativ einfach als Dunkelstelle in der zuvor eingelernten Linie erkannt werden. Das Reflektorband ist aber andererseits auch ein zusätzliches Bauteil, welches an dem Überwachungsbereich angebracht werden muss. Der Zusatzaufwand bei der Installation ist oft ebenso unerwünscht wie die Tatsache, dass im Falle von Materialzufuhren oder ähnlichen Arbeitsschritten an dem Überwachungsbereich die Gefahr der Beschädigung oder Beschmutzung des Reflektorbandes besteht.

Alternativ sind sogenannte tastende Kamerasysteme bekannt, die also nicht auf einen kooperierenden Reflektorstreifen angewiesen sind. Stattdessen wird ein abgrenzendes Beleuchtungsmuster aktiv in den Überwachungsbereich projiziert. Eine solche Anordnung wird beispielsweise in der DE 299 11 390 U1 beschrieben.

Außerhalb der Sicherheitstechnik werden Lichtschnittverfahren eingesetzt, beispielsweise für die 3D-Inspektion. Eine Laserlinie wird über das zu prüfende Objekt bewegt, und mit Hilfe eines Kamerasensors wird die Verschiebung und Verformung der Laserlinie durch die Objektkontur ausgewertet.

Ohne Reflektorstreifen treten hohe Intensitätsunterschiede des empfangenen Signals aufgrund von Entfernungs- und Remissionsunterschieden auf. Das bringt einen hohen Dynamikbereich mit sich, welcher die Auswertung erschwert. Denn die Energie der Beleuchtung oder Laserlinie wird diffus nach dem Lambertschen Gesetz in den Halbraum remittiert. Anders als bei einem Retroreflektor kommt deshalb nur ein stark entfernungs- und remissionsabhängiger kleiner Anteil zum Empfänger zurück. Stellt man sich auf eine für zuverlässige Detektion im Fernbereich ausreichende Beleuchtungsleistung ein, so führt dies zu Übersteuerungseffekten an der Kamera. Die Auswertung von Bildern, die unter Übersteuerung oder Unterbelichtung wegen zu geringe Empfangsleistungen entstehen, führt bei Lichtschnittverfahren zu Ungenauigkeiten in der Positionsbestimmung und bei der zuverlässigen Erkennung, ob ein Objekt eingegriffen hat, möglicherweise zu Fehlern, die gerade in der Sicherheitstechnik nicht toleriert werden können.

In der JP 2001 333 423 A wird eine Überwachungskamera offenbart, die neben dem Objektiv zwei vertikale Reihen von LEDs aufweist. Je nach Neigung der Kamera kann der Strom der oberen oder unteren LEDs verringert werden, um den durch die Neigung verkürzten Abstand zu einem erfassten Objekt auszugleichen und deshalb auch bei geneigter Kamera eine gleichmäßige Ausleuchtung zu erreichen.

Die EP 2 560 366 A2 beschreibt eine 3D-Kamera mit einer aktiven Kontrastmusterbeleuchtung. Die Lichtquelle der Beleuchtungseinheit weist ein Halbleiterarray mit einer Vielzahl von Einzelemittern und ein Mikrooptikarray auf.

Es ist daher Aufgabe der Erfindung, die Beleuchtung einer gattungsgemäßen Überwachungsvorrichtung zu verbessern.

Diese Aufgabe wird durch eine optoelektronische Vorrichtung und ein Verfahren zur Überwachung eines Überwachungsbereichs nach Anspruch 1 beziehungsweise 15 gelöst. Dabei geht die Erfindung von dem Grundgedanken aus, Kamerabilder der aktiv beleuchteten Randflächen aufzunehmen und auszuwerten, welche den Überwachungsbereich abgrenzen. Die Beleuchtungseinheit wird dabei so optimiert, dass die Bilddaten sämtliche relevanten Bereiche der Randflächen ohne Übersteuerung oder Unterbelichtung erfassen. Das hat den Vorteil, dass Objekte unabhängig von Geometrie oder Remissionsverhalten der Randflächen zuverlässig erkannt werden.

Die Auswertungseinheit erkennt vorzugsweise einen Objekteingriff anhand von Veränderungen eines von der Beleuchtungseinheit auf den Randflächen erzeugten Beleuchtungsmusters. Objekteingriffe werden entsprechend einem Lichtschnittverfahren an Veränderungen eines projizierten Beleuchtungsmusters erkannt, insbesondere Verzerrungen und Verschiebungen einer Beleuchtungslinie. In einer solchen Ausführungsform ist kein Reflektorband notwendig, das folglich nicht installiert werden muss und weder verschmutzt noch beschädigt werden kann.

Die Randflächen bilden bevorzugt eine Öffnung mit einer bekannten geometrischen Form, und die Beleuchtungseinheit erzeugt ein in einer Längsrichtung ausgedehntes Beleuchtungsmuster, dessen Intensität über die Längsrichtung variiert, um unterschiedliche Entfernungen zu den Randflächen zu kompensieren. Dadurch werden die eingangs geschilderten Dynamikprobleme gänzlich verhindert oder wenigstens gemindert. Im Idealfall werden die relevanten abgrenzenden Randflächen unabhängig von ihrer Entfernung zum Bildsensor gleich hell aufgenommen.

Die Öffnung ist bevorzugt rechteckig, und die Intensität des Beleuchtungsmusters, bezogen auf die Längsrichtung, ist in der Mitte überhöht und fällt zu den Seiten ab. Bei Montage der Vorrichtung in der Ecke einer rechteckigen Öffnung ist die längste Entfernung einer Randfläche durch die Diagonale des Rechtecks gegeben. Somit ergibt sich der größte entfernungsbedingte Energieverlust längs der Diagonale und damit mittig in dem Beleuchtungsmuster. Nach den Seiten hin werden die Entfernungen zu den Randflächen geringer. Diese Abstandseffekte werden durch ein entsprechendes Intensitätsprofil ausgeglichen.

Die Intensität des Beleuchtungsmusters wird bevorzugt durch Anpassung der Sendeleistung mehrerer Lichtquellen und/oder durch Umverteilung mittels einer angepassten Sendeoptik über die Längsrichtung variiert. Dadurch ergeben sich ausreichend Verstellmöglichkeiten, um die Kompensation durch Beleuchtungsmuster mit ortsabhängiger Intensitätsverteilung an die Geometrie der Randflächen anzupassen.

Die Auswertungseinheit ist bevorzugt für einen Einlernmodus ausgebildet, in dem die Sendeleistung der Beleuchtungseinheit und/oder die Integrationszeit des Bildsensors an die tatsächlich von den Randflächen empfangene Intensität angepasst wird. Zusätzlich zum Abstand der Randflächen hängt die empfangene Intensität auch von dem Remissionsvermögen der Randflächen ab. Das unterschiedliche Remissionsverhalten kann über die Beleuchtungsintensität beziehungsweise die Integrationszeit berücksichtigt werden.

In einer weiteren bevorzugten Ausführungsform weisen die Randflächen einen in einer Längsrichtung ausgedehnten und in einer Querrichtung schmalen Kontrastmusterstreifen auf, so dass die Auswertungseinheit Objekteingriffe in den Überwachungsbereich anhand von Abschattungen des Kontrastmusterstreifens erkennt, und wobei die Frontscheibe als Sendeoptik der Beleuchtungseinheit derart geformt ist, dass das Licht der Lichtquellen in Längsrichtung zu einer Linienbeleuchtung aufgeweitet und in Querrichtung homogenisiert ist. Hier werden mit einem Kontrastmusterstreifen Grenzen des Überwachungsbereichs festgelegt, und der Bildsensor nimmt ein Bild des Kontrastmusterstreifens auf. Objekte werden dann in einer Bildauswertung erkannt, wenn der Kontrastmusterstreifen zumindest partiell abgeschattet oder unterbrochen ist. Auf diese Weise wird eine Art virtuelle Wand zwischen Bildsensor und Kontrastmusterstreifen aufgespannt.

Der Kontrastmusterstreifen hat vorzugsweise die Geometrie eines langgezogenen Rechtecks mit einer ausgeprägten Längsausdehnung und einer vergleichsweise sehr schmalen Breite quer dazu. Der Kontrastmusterstreifen kann aber geknickt werden, um beispielsweise eine Ecke einer Durchgangsöffnung einzubeziehen. In diesem Fall sind die ausgedehnte Längsrichtung und die schmale Querrichtung nur abschnittsweise festgelegt. Trotz eines solchen Knicks bleibt der Kontrastmusterstreifen insgesamt in einer gleichen, von dem Kontrastmusterstreifen und dem Bildsensor gebildeten Ebene. Es genügt also ein im Wesentlichen eindimensionaler, zeilenförmiger Bildsensor zum Abbilden des Kontrastmusterstreifens. Allerdings umfasst dieser Bildsensor vorzugsweise nicht nur eine einzige, sondern eine Matrix mit mehreren Zeilen von Lichtempfangselementen, um das Kontrastmuster auch in Querrichtung aufzulösen.

Die Frontscheibe wird vorzugsweise als strahlformendes Element für die Lichtquellen der Beleuchtungseinheit genutzt. Die Frontscheibe wirkt dann als Sendeoptik. In der Querrichtung wird dadurch die ansonsten stark mit dem Azimutwinkel abfallende Beleuchtungsintensität homogenisiert. In der Längsrichtung wird das jeweilige Sendelichtbündel der Lichtquellen aufgeweitet. Es resultiert eine gleichmäßige Linienbeleuchtung. Durch das Aufweiten in Längsrichtung vermischen sich die Sendelichtbündel mehrerer nebeneinander angeordneter Lichtquellen. Es muss dabei aber nicht zwingend jede Lichtquelle die ganze Längserstreckung des Kontrastmusterstreifens abdecken, diese Aufgabe können sich auch mehrere Lichtquellen oder Gruppen von Lichtquellen teilen.

Die Verwendung der Frontscheibe als Sendeoptik ermöglicht, das aufwändige MID-Bauteil durch eine einfache Elektronikkarte zu ersetzen. Dies reduziert die Herstellkosten erheblich, zumal die andererseits entstehenden Mehrkosten für eine strahlformende Frontscheibe äußerst gering bleiben. Außerdem wird die mechanische Robustheit durch Wegfall des MID-Bauteils deutlich erhöht. Durch die Homogenisierung und Strahlformung des Lichts ("Flat-Top-Profil") wird ermöglicht, dass jede einzelne Lichtquelle das gesamte Kontrastmuster oder zumindest einen erheblichen Anteil davon gleichmäßig beleuchtet. Der Ausfall einer Lichtquelle führt dann nicht mehr zu einem Abschalten, sondern nur noch zu einer Absenkung des Gesamtsignals. Aus ähnlichen Überlegungen kann gegebenenfalls schon die anfängliche Gesamtzahl der Lichtquellen verringert werden, denn nicht mehr Abstrahlbreite der einzelnen Lichtquelle und abzudeckender Gesamtwinkelbereich legen die Anzahl fest, sondern nur noch die gewünschte Gesamtintensität in dem deutlich vergrößerten Überlappungsbereich. Aufgrund des großen Überlappungsbereichs kann eine Messung des Schielwinkels in der Produktion entfallen.

Die Strahlformung durch die Frontscheibe sorgt für größere Beleuchtungsstärken vor allem bei einem seitlichen Verkippen von Bildsensor und dessen zugehöriger Empfangsoptik aufgrund von Toleranzen oder bei einem seitlichen Versatz der Kamera gegenüber dem Kontrastmusterstreifen, um die Kamera außen an einer Durchgangsöffnung montieren zu können ("Off-Axis-Anordnung"). Verluste durch Anpassung an die schwächste Lichtquelle entfallen wegen der gegenseitigen Vermischung der Sendelichtbündel durch die Aufweitung in Längsrichtung. Die strahlformende Frontscheibe macht den Aufbau der Beleuchtungseinheit wesentlich flexibler. Die Lichtquellen müssen nicht mehr ringförmig angeordnet werden, sondern die Anordnung kann unter Berücksichtigung von Herstellkosten, Bauraum, thermischer Anbindung oder anderen Kriterien optimiert werden.

Die Frontscheibe weist bevorzugt eine erste Grenzfläche auf, die zu den Lichtquellen hin angeordnet und so geformt ist, dass in die Frontscheibe eintretendes Licht der Lichtquellen kollimiert ist. Die erste Grenzfläche kann dazu wie eine Sammellinse eine konvexe Krümmung aufweisen. Nach Durchtritt durch diese innere Grenzfläche und damit innerhalb der Frontscheibe ist das Licht der Lichtquelle annähernd parallel ausgerichtet. Dies resultiert einerseits in einem kontrollierten Strahlengang innerhalb der Frontscheibe für deren weitere Strahlformungsaufgaben und andererseits der gewünschten homogenen Lichtverteilung in Querrichtung.

Die Frontscheibe weist bevorzugt eine zweite Grenzfläche auf, die zu dem Überwachungsbereich hin angeordnet und so geformt ist, dass aus der Frontscheibe austretendes Licht in Längsrichtung aufgeweitet ist. Damit entsteht an der äußeren Grenzfläche bei Austritt des Lichts jeweils ein divergentes Strahlenbündel, das also zu einer Linienbeleuchtung aufgezogen ist.

Die Frontscheibe weist dazu noch bevorzugter an der zweiten Grenzfläche ein Zylinderlinsenarray auf. Das ist eine beispielhafte Ausgestaltung, um das divergente Strahlenbündel zu erzeugen. Das Zylinderlinsenarray wird vorzugsweise in die Frontscheibe integriert.

Die erste Grenzfläche und die zweite Grenzfläche stehen vorzugsweise zumindest annähernd senkrecht zu der optischen Achse des Bildsensors. Dabei wird die optische Achse des Bildsensors regelmäßig durch dessen Empfangsoptik bestimmt und auch als Beobachtungsachse bezeichnet. Die optischen Achsen der Lichtquellen und die Beobachtungsachse sind vorzugsweise zueinander parallel.

Die Frontscheibe weist bevorzugt zwei weitere Grenzflächen auf, die gegenüber der optischen Achse des Bildsensors verkippt sind und den Beobachtungswinkel durch zweifache interne Totalreflexion an den weiteren Grenzflächen verringern. Der Beobachtungswinkel ist der Winkel zwischen Sende- und Empfangsoptik und entspricht damit dem Winkel, unter dem Licht der Lichtquellen an dem Kontrastmusterstreifen reflektiert und in dem Bildsensor registriert wird. Je kleiner dieser Winkel ist, umso mehr Licht wirft der Kontrastmusterstreifen zu dem Bildsensor zurück. Das gilt besonders dann, wenn der Kontrastmusterstreifen als Reflektorstreifen mit Retroreflektorelementen ausgebildet ist. Die Rückstreucharakteristik zeigt dann ein Maximum bei einem nur theoretisch denkbaren Beobachtungswinkel Null und fällt für zunehmende Beobachtungswinkel stark ab. Durch zweifache oder noch häufigere interne Totalreflexion entsteht ein Parallelversatz der Sendelichtbündel, welcher die Sendestrahlachse näher an die Beobachtungsachse heranbringt und damit den Beobachtungswinkel verringert.

Die weiteren Grenzflächen verdecken vorzugsweise in Querrichtung einen äußeren Teil einer Empfangsoptik des Bildsensors. Das erscheint zunächst paradox, denn man würde erwarten, dass durch so eine Teilverdeckung der Eintrittspupille die Empfangsintensität abnimmt. Tatsächlich würden aber die äußeren Bereiche der Empfangsoptik in Querrichtung nur bei großen Feldwinkeln ausgenutzt. Der Kontrastmusterstreifen liegt aber in Querrichtung zentral, so dass aus großen Feldwinkeln keine relevanten Lichtanteile aufgenommen werden. Durch die Teilverdeckung kann der Beobachtungswinkel noch stärker verringert und so die Rückstreuung der Beleuchtungseinheit weiter verbessert werden.

Die Frontscheibe weist bevorzugt einen ersten Teilbereich mit einer ersten Grenzfläche, der senkrecht zu der optischen Achse des Bildsensors steht und dagegen radial nach außen versetzt angeordnet ist, einen zweiten Teilbereich mit einer zweiten Grenzfläche, der parallel zu dem ersten Teilbereich angeordnet, jedoch nicht nach radial außen versetzt ist, sowie mindestens einen schräg zu dem ersten Teilbereich stehenden Verbindungsbereich mit mindestens zwei weiteren Grenzflächen auf. Die Frontscheibe bildet damit insgesamt eine Ausbuchtung, die in Beobachtungsrichtung durch den zweiten Teilbereich abgeschlossen ist. Der erste Teilbereich liegt parallel zu dem zweiten Teilbereich, nämlich in Beobachtungsrichtung weiter innen und radial nach außen versetzt als Rahmen der Ausbuchtung. Quasi als Seitenwände der Ausbuchtung sind die für die gewünschte Totalreflexion zweckmäßigerweise um annähernd 45° verkippten Verbindungsbereiche. Die Anordnung ist vorzugsweise spiegelsymmetrisch zu der Beobachtungsrichtung, damit die Frontscheibe je eine gleichartige obere und untere Anordnung von Lichtquellen zu einer in Querrichtung homogenen Linienbeleuchtung aufweiten kann.

Die Frontscheibe weist bevorzugt einen Auskopplungsbereich für einen Testlichtstrahl zur Überwachung der Ausgangsleistung der Beleuchtungseinheit auf. Damit kann auf zusätzliche optische Elemente für die Funktionsüberwachung der Lichtquellen verzichtet werden.

Die Frontscheibe ist bevorzugt ein Spritzgussteil. Damit verursachen die Strahlformungseigenschaften außer dem einmaligen Aufwand für die Bereitstellung einer Spritzgussform mit der gewünschten Formgebung praktisch keine Zusatzkosten.

Die Lichtquellen sind vorzugsweise in mindestens einer Zeile angeordnet. Noch bevorzugter sind zwei in sich in Längsrichtung orientierte und in Querrichtung zu der Beobachtungsachse entgegengesetzt versetzte Zeilen vorgesehen. Die Lichtquellen umgeben die Empfangsoptik bei möglichst kleinem Beobachtungswinkel.

Die Auswertungseinheit ist bevorzugt dafür ausgebildet, bei Erkennen eines Objekteingriffs ein sicherheitsgerichtetes Abschaltsignal auszugeben. Dadurch wird bei Durchbrechen der virtuellen Wand, welche von der Vorrichtung aufgespannt ist, beispielsweise eine Tür geschlossen oder deren Öffnen verweigert oder eine überwachte Gefahrenquelle, wie eine gefährliche Maschine, in einen sicheren Zustand überführt oder abgeschaltet.

Die erfindungsgemäße optoelektronische Vorrichtung wird bevorzugt an einer insbesondere rechteckigen Öffnung angeordnet, wobei der Bildsensor in einer Ecke der Öffnung gegenüber den von dem Bildsensor aufgenommenen Randflächen angeordnet ist. Dadurch wird ein Schutzfeld in der Öffnung aufgespannt und ein unzulässiger Durchtritt beziehungsweise Eingriff rechtzeitig erkannt.

Das erfindungsgemäße Verfahren kann in ähnlicher Weise in weiteren Ausführungsformen fortgebildet werden und zeigt dabei ähnliche Vorteile, wie dies beispielhaft, aber nicht abschließend, in den sich an das Verfahren anschließenden Unteransprüchen angegeben ist.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Übersicht zu einer Ausführungsform einer Vorrichtung zur Überwachung;
- Fig. 2: eine dreidimensionale Ausschnittsdarstellung der Übersicht gemäß der Fig. 1 ;
- Fig. 3: eine Schnittdarstellung einer strahlformenden Frontscheibe;
- Fig. 4: eine schematische Draufsicht auf einen Bildsensor und diesen zeilenförmig umgebende Lichtquellen;
- Fig. 5: den Abstand der zu überwachenden Randflächen in Abhängigkeit des Winkels;
- Fig. 6: den durch den Abstand gemäß Figur 5 bedingten winkelabhängigen Intensitätsabfall; und
- Fig 7: eine den Intensitätsabfall gemäß Figur 6 kompensierende, angepasste winkelabhängige Intensitätsverteilung einer Beleuchtung.

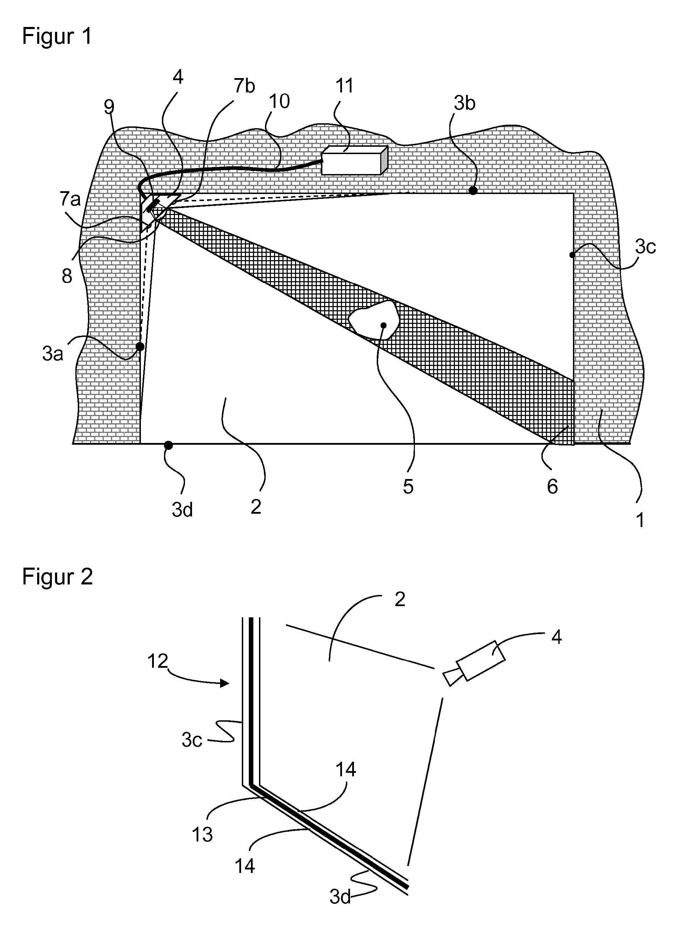

Figur 1 zeigt in einer schematischen Übersicht eine Trennwand 1, in der sich eine Durchgangsöffnung 2 befindet, die durch Randflächen 3a - 3d begrenzt ist. Eine Kamera 4 in einer Ecke der Durchgangsöffnung 2 nimmt das Bild der beiden gegenüberliegenden Randflächen 3c, 3d auf. Die Kamera 4 hat in der Darstellung einen größeren Öffnungswinkel als 90° und sieht daher auch noch Abschnitte der Randflächen 3a, 3b. Um die Durchgangsöffnung 2 vollständig zu überwachen, genügen die Randflächen 3c, 3d als Überwachungsbereich. Je nach Anwendung kann aber auch ein Teilabschnitt ausreichen.

Die Kamera 4 überwacht, ob sich ein Objekt 5 in der Durchgangsöffnung 2 befindet. Dieses Objekt 5 verändert nämlich das aufgenommene Bild der Kamera, das ohne das Objekt 5 den nunmehr abgeschatteten Bereich 6 des Überwachungsbereichs ungestört gezeigt hätte. Neben der Kamera 4 sind Lichtquellen 7a, 7b einer Beleuchtungseinheit angeordnet. Obwohl grundsätzlich jede Lichtquelle denkbar ist, eignen sich Halbleiterlichtquellen wie LEDs oder Laserdioden insbesondere im Infrarotbereich besonders. Die Kamera 4 weist eine Empfangsoptik oder ein Empfangsobjektiv 8 und einen ortsauflösenden Bildsensor 9 auf. Der Bildsensor kann in CMOS- oder CCD-Technologie oder jeder anderen bekannten Bauweise aufgebaut sein, die ein Bild zu liefern vermag. Dabei weist der Bildsensor 9 vorzugsweise innerhalb der Ebene der Durchgangsöffnung deutlich mehr Pixel auf als quer dazu. Diese langgestreckte oder Zeilenform lässt sich aber auch erreichen, indem Pixelzeilen eines Matrixsensors unberücksichtigt bleiben.

Das Bild wird mit der von der Anwendung geforderten Wiederholungsfrequenz über eine Datenleitung 10 an eine Auswertungseinheit 11 übertragen. Die Auswertungseinheit 11 ist darüber hinaus mit den Lichtquellen 7a, 7b verbunden, um deren Licht zu steuern. Die Auswertungseinheit 11 kennt das Bild der Kamera 4, wenn sich kein Objekt 5 in der Durchgangsöffnung 2 befindet, oder daraus abgeleitete Referenzinformationen, und kann aus einer Veränderung gegenüber dieser Erwartungshaltung das Objekt 5 erkennen. Denn das Objekt 5 sorgt in einer Ausführungsform für eine deutlich erkennbare Teilabschattung oder Unterbrechung des erwarteten, ungestörten Abbilds der Randflächen 3a-3d beziehungsweise eines darauf angebrachten Kontrastmusterstreifens.

In einer anderen Ausführungsform wird entsprechend einem Lichtschnittverfahren erkannt, wenn sich ein von der Beleuchtungseinheit erzeugtes Beleuchtungsmuster verändert, das im durch die Referenzinformationen erfassten ungestörten Zustand ohne Objekt 5 auf die Randflächen 3a-3d projiziert würde. Bei einem Eingriff eines Objekts 5 wird der Lichtweg gegenüber dem aus den Referenzinformationen zumindest implizit bekannten Abstand zu den Randflächen 3a-3d verkürzt. Aufgrund der Triangulationsanordnung zwischen Sender und Empfänger kommt es im Bereich des Objekts 5 zu einer Verschiebung des Beleuchtungsmusters auf dem Bildsensor 9. Diese Verschiebung wird erkannt und gegebenenfalls als Schutzfeldeingriff gewertet.

Die Beleuchtungseinheit mit den Lichtquellen 7a, 7b sowie der Bildsensor 9 sind von einem nicht dargestellten Gehäuse geschützt, welches in Beobachtungsrichtung durch eine Frontscheibe abgeschlossen ist. Abweichend von der Darstellung kann auch die Auswertungseinheit 11 in dieses Gehäuse integriert werden.

Die Kamera 4 überwacht somit die Durchgangsöffnung 2 gegenüber Objekten 5. Eine denkbare Anwendung ist, dass hinter der Durchgangsöffnung 2 ein Gefahrenbereich liegt, beispielsweise eine Presse oder sonst eine Maschine, von der Personen verletzt werden könnten. Bei Eintritt in die Durchgangsöffnung 2 kann dann ein Warnsignal gegeben oder die Maschine abgeschaltet werden. Die Anwendung kann aber auch etwa eine Diebstahlsicherung sein, bei der niemand unautorisiert den Bereich hinter der Durchgangsöffnung 2 betreten soll, ohne dass er sich dort wie in der Anwendung als Schutzvorrichtung selbst gefährdet. Die Anwendungen sind auf diese Beispiele nicht beschränkt, die Vorrichtung ist überall einsetzbar, wo der Eintritt eines Objektes erkannt werden soll. Auch die besondere Anordnung in einer Durchgangsöffnung 2 ist beispielhaft zu verstehen; der Überwachungsbereich muss nicht wie in Fig. 1 dargestellt eine Durchgangsöffnung 2 sein, sondern kann eine beliebige Fläche an einem beliebigen Ort sein.

Figur 2 zeigt nochmals einen dreidimensionalen Ausschnitt aus der Übersicht gemäß Figur 1. Die Kamera 4 blickt wegen der veränderten Perspektive der Darstellung nunmehr von rechts auf die Durchgangsöffnung 2. Die Randflächen 3c, 3d sind in einer Ausführungsform mit einem Kontrastmusterstreifen 12 versehen, der hier beispielhaft einen mittigen retroreflektierenden oder alternativ einfach hellen Teilstreifen 13 aufweist, der von zwei dazu parallelen nichtreflektierenden oder dunklen Teilstreifen 14 flankiert wird. Das ist ein Beispiel für ein Kontrastmuster, das in jedem Winkelbereich der Durchgangsöffnung 2 sowohl einen hellen als auch einen dunklen Kontrast anbietet. Zahlreiche Variationen wie Bögen, mehr oder weniger helle oder dunkle Teilstreifen 13, 14, breitere und schmalere Teilstreifen 13, 14 und ähnliches sind denkbar. In einer Ausführungsform mit Auswertung durch ein Lichtschnittverfahren wird kein physischer Kontrastmusterstreifen 12 abgebracht, sondern ein Beleuchtungsmuster, das in seiner Struktur dem Kontrastmusterstreifen 12 entsprechen oder beispielsweise eine durchgehende oder gepunktete Linie sein kann, auf die Randflächen 3a-3d projiziert.

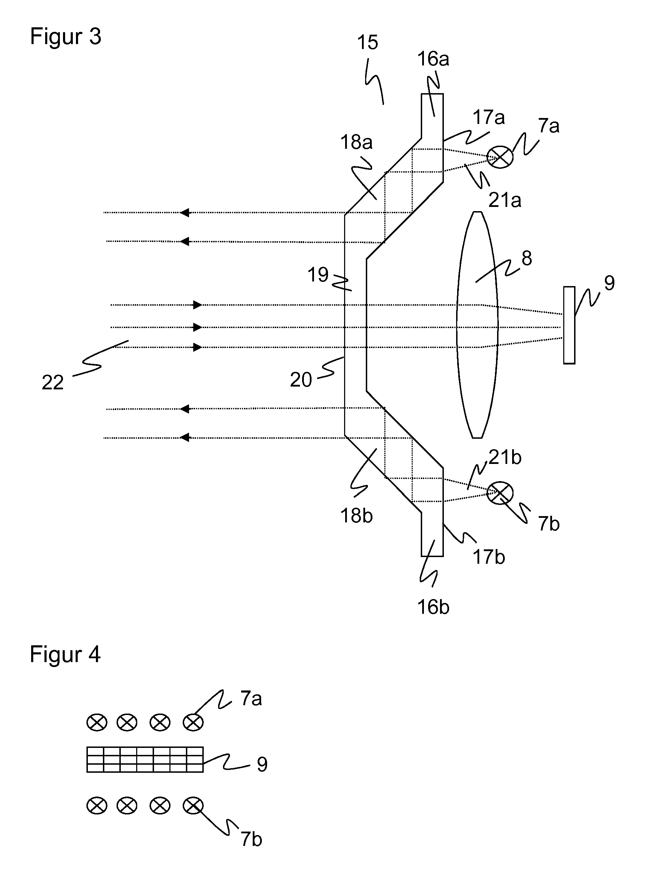

Figur 3 zeigt eine Schnittansicht einer strahlformenden Frontscheibe 15, durch die das Sendelicht der Beleuchtungseinheit mit den Lichtquellen 7a, 7b in Querrichtung homogenisiert und in Längsrichtung zu einer Linienbeleuchtung aufgeweitet wird. Die Frontscheibe 15 ist nicht rotationssymmetrisch, sondern spiegelsymmetrisch zu einer horizontalen Mittellinie, welche der Beobachtungsachse, also der optischen Achse des nur durch eine einfache Linse symbolisierten Empfangsobjektivs 8 entspricht.

Oberhalb und unterhalb der Beobachtungsachse weist die Frontscheibe 15 jeweils einen ersten Teilbereich 16a, 16b mit einer inneren oder ersten Grenzfläche 17a, 17b auf, die senkrecht zu der Beobachtungsachse steht. An den ersten Teilbereich 16a, 16b schließt sich jeweils ein um 45° geneigter Verbindungsbereich 18a, 18b an. Die Frontscheibe wird durch einen gegenüber den ersten Teilbereichen 16a, 16b sowohl längs der Beobachtungsachse als auch radial nach innen parallelversetzten zweiten Teilbereich 19 mit einer nach außen weisenden, senkrecht zu der Beobachtungsachse stehenden zweiten Grenzfläche 20 abgeschlossen.

Die Frontscheibe 15 ist an der ersten Grenzfläche 17a, 17b im Bereich der Durchtrittsapertur der von den Lichtquellen 7a, 7b erzeugten Sendelichtstrahlbündel 21 a, 21 b so geformt, beispielsweise durch konvexe Ausbuchtungen, dass das Licht zunächst kollimiert wird. Wie in Figur 4 in einer schematischen Draufsicht auf den Bildsensor 9 und die Lichtquellen 7a, 7b gezeigt, sind die Lichtquellen 7a, 7b in einer bevorzugten Ausführungsform zu zwei Zeilen oberhalb und unterhalb des Bildsensors 9 angeordnet. Bei anderen Optimierungsvorgaben für den Bauraum oder den Lichtweg innerhalb der Frontscheibe 15 können sich aber auch andere Anordnungen der Lichtquellen 7a, 7b ergeben.

Nach der Kollimierung bei Eintritt verlaufen die Sendelichtstrahlbündel 21 a, 21 b innerhalb der Frontscheibe 15 einigermaßen parallel und können in den Verbindungsbereichen 18a, 18b durch zweimalige oder noch häufigere Totalreflexion umgelenkt werden. Diese Umlenkung führt zu einem Parallelversatz radial nach innen bezüglich der Beobachtungsachse. Dadurch wird der Beobachtungswinkel verringert, also der Winkel zwischen austretendem Sendelichtstrahlbündel 21 a, 21 b und Empfangsstrahlenbündel 22. Anders ausgedrückt sind die Lichtquellen 7a, 7b virtuell radial nach innen versetzt, und zwar in einem Maße, dass real baubedingt nicht möglich wäre. Wie schon weiter oben erläutert, erhöht ein kleiner Beobachtungswinkel die Rückstrahlwerte von dem Kontrastmusterstreifen 12 beziehungsweise dessen reflektierendem Teilstreifen 13. Um ein paar beispielhafte Zahlen zu nennen, beträgt herkömmlich der Beobachtungswinkel 1,7° bei einer Reichweite von 0,4m, entsprechend dem Abstand zwischen Bildsensor 9 und Kontrastmusterstreifen 12, und 0,46° bei einer Reichweite von 1,5m. Eine Verkürzung des Beobachtungswinkels um einen Faktor 2 durch die Totalreflexionen in den Verbindungsbereichen 18a, 18b erhöht die Rückstrahlwerte um ca. 60%.

Nach der zweiten Umlenkung in den Verbindungsbereichen 18a, 18b werden die Sendelichtstrahlbündel 21 a, 21 b an der zweiten Grenzfläche 20 des zweiten Teilbereichs 19 so umgeformt, dass ein divergentes Strahlenbündel entsteht. Die Aufweitung erfolgt dabei aber nur in einer Längsrichtung, welche in Figur 3 einer Senkrechten auf die Papierebene entspricht. In Figur 1 führt dies zu einem über die Ebene der Durchgangsöffnung 2 aufgeweiteten Strahlenbündel. Eine solche Aufweitung wird beispielsweise durch eine Zylinderlinse oder eine entsprechende Array-Anordnung in der Frontscheibe 15 in dem zweiten Teilbereich 19 realisiert. Die einzelnen Sendelichtstrahlbündel 21a, 21 b decken damit als Linienbeleuchtung einen möglichst großen Winkel von bis zu 100° ab. Die gegenseitigen Überlappungen der einzelnen Lichtquellen 7a, 7b machen die Beleuchtungseinheit robuster gegen einzelne Ausfälle.

In Querrichtung, also der Vertikalen in Figur 3 oder senkrecht zu der Durchtrittsöffnung 2 in Figur 1, soll dagegen das Beleuchtungsprofil zumindest im Bereich der maximal zulässigen seitlichen Verkippung des Kamerasystems weitestgehend homogen verlaufen. Das wird durch die anfängliche Kollimation erreicht. Damit wird die Beleuchtungsintensität unabhängiger von einer seitlichen Verkippung im zulässigen Rahmen. Bei guter Ausrichtung ("On-Axis-Anordnung") werden durch eine Homogenisierung immerhin 33%, bei maximaler seitlicher Verkippung ("Off-Axis-Anordnung") sogar 77% größere Bestrahlungsstärken erreicht.

Wie in Figur 3 zu erkennen, wird das Empfangsobjektiv 8 in Querrichtung teilweise durch die Verbindungsbereiche 18a, 18b zur Umlenkung der Sendelichtstrahlbündel 18a, 18b abgedeckt. Diese Abdeckung führt aber nicht zu einer Abschattung der relevanten Strahlengänge oder einer Reduktion der Signalhelligkeit, da das in das Empfangsobjektiv 8 eintretende Empfangsstrahlenbündel 22 durch dessen Eintrittspupille begrenzt ist. Es wird also gar nicht der ganze Öffnungsbereich der ersten Linse des Empfangsobjektivs 8 genutzt. Insbesondere bei einem Empfangsobjektiv 8 mit winkeläquidistanter Auflösung kann die Abbildung des Kontrastmusterstreifens 12 nicht durch die angesprochene Abdeckung beeinträchtigt werden. Dabei wird gezielt der Umstand ausgenutzt, dass der Ort der Eintrittspupille eines Weitwinkelobjektivs abhängig vom Feldwinkel auf der Frontlinse wandert. Da der Kontrastmusterstreifen nur in Längsrichtung ausgedehnt und in Querrichtung schmal ist, bleibt ein Teilbereich der Eintrittsfläche des Empfangsobjektivs 8 effektiv ungenutzt, und dieser Teilbereich kann zur Verringerung des Beobachtungswinkels abgedeckt werden.

In einer nicht dargestellten Alternative kann der Beobachtungswinkel auch durch den Einsatz eines halbdurchlässigen Spiegels verringert werden. Im Vergleich mit der soeben beschriebenen Lösung lässt sich der Beobachtungswinkel nochmals weiter verringern, und so kann eine Vergrößerung der Rückstreuwerte um ca. 85% erreicht werden. Zwar geht ein Teil des Effekts durch Teilreflexionen wieder verloren, dennoch wird insgesamt die Reichweite erhöht.

Die Funktionen der Frontscheibe 15, nämlich Kollimation, Homogenisierung, Umlenkung zur Annäherung an die Beobachtungsachse, Aufweitung des Bestrahlungswinkels in Längsrichtung des Kontrastmusterstreifens 12 und Justierbarkeit des Strahlungsprofils, können auch einzeln oder in Untergruppen vorteilhaft angewandt werden.

Die Umlenkung kann wie beschrieben durch interne Totalreflexion, alternativ aber auch durch Beschichtung oder separate Bauteile erreicht werden. Auch die Strahlformung lässt sich durch separate Bauteile erzielen oder unterstützen.

Schließlich kann die Frontscheibe 15 neben den hier genannten primären Aufgaben auch zur Überwachung der Ausgangsleistung der Lichtquellen 7a, 7b verwendet werden, indem ein parasitärer Lichtanteil ausgekoppelt wird.

Durch die beschriebenen verschiedenen Ausprägungen der Frontscheibe 15 kann die Intensitätsverteilung der Beleuchtungseinheit bestimmt werden. Das ist einerseits nützlich, um den Kontrastmusterstreifen 12 gleichmäßig auszuleuchten. Ein wählbares Intensitätsprofil kann aber ebenso eingesetzt werden, um bei Auswertung mittels Lichtschnittverfahren ein Beleuchtungsmuster zu erzeugen, welches Dynamikeffekte durch die Geometrie der Durchgangsöffnung 2 oder das Remissionsverhalten der Randflächen 3a-3d kompensiert. Dabei wird ein solches Intensitätsprofil besonders vorteilhaft, aber nicht notwendig durch die Frontscheibe 15 erzeugt. Alternativ ist auch denkbar, die Sendeleistung der Lichtquellen 7a, 7b individuell anzupassen oder eine eigene Sendeoptik insbesondere mit passender Freiformfläche zu verwenden.

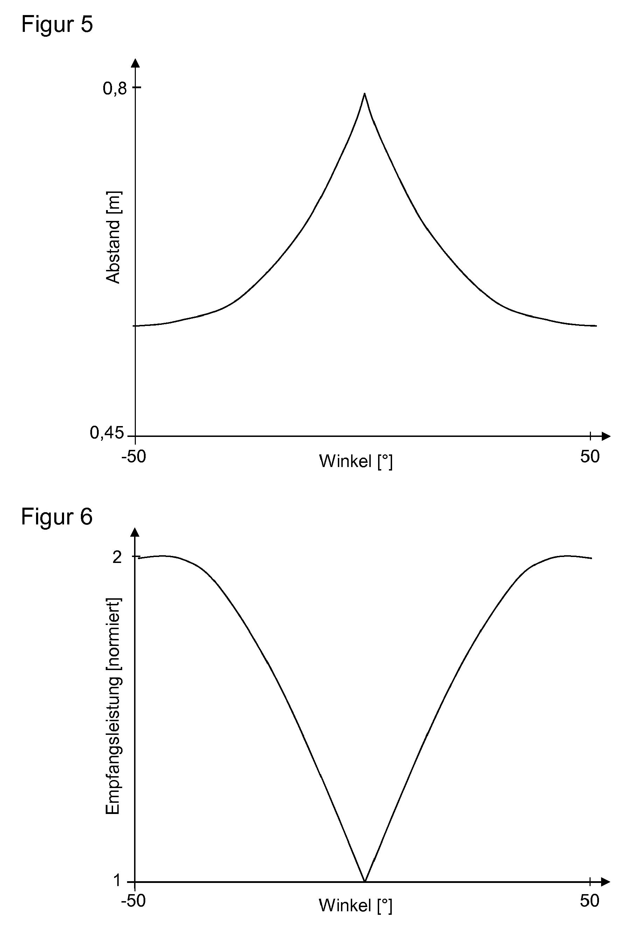

Die Figuren 5 bis 7 illustrieren den Einfluss der Geometrie der Durchgangsöffnung 2 auf die empfangene Intensität und ein Beispiel zu dessen Kompensation durch eine angepasste Intensitätsverteilung in dem Beleuchtungsmuster. Dabei zeigt zunächst Figur 5 den winkelabhängigen Abstand der Randflächen 3c-d zu dem Bildsensor 9 bei einer quadratischen Durchgangsöffnung mit Kantenlänge 0,6m. Der Bildsensor 9 ist dabei wie in Figur 1 in einer Ecke angebracht und zu der diametral gegenüberliegenden Ecke ausgerichtet. Ein Winkel von 0° entspricht deshalb der Diagonalen und damit dem maximalen Abstand. Zu den Seiten hin wird der Abstand geringer und fällt wegen der Eigenabmessungen der Kamera 4 leicht unter die Kantenlänge von 0,6m der Durchgangsöffnung 2.

Diese geometrischen Verhältnisse sind vorab bekannt, und der Einsatz an einer quadratischen oder rechteckigen Durchgangsöffnung ist die gängige Anwendung. Der Figur 5 entsprechende Abstandsprofile lassen sich aber selbstverständlich auch für andere Geometrien bestimmen. Die Signalunterschiede aufgrund der winkelabhängigen Entfernungen der Randflächen 3a-3d können so sehr genau abgeschätzt werden.

Figur 6 zeigt die auf das Minimum normierte, zu den Abständen aus Figur 5 korrespondierende winkelabhängige Empfangsleistung unter der Annahme von über die Randflächen 3a-3d konstanter Remission. Es ergibt sich demnach in der betrachteten Situation ein bereits erheblicher Dynamikunterschied mit Faktor 2. Dieser Dynamikunterschied wird durch Anpassung der Energieverteilung in dem Beleuchtungsmuster innerhalb der Szenerie korrigiert.

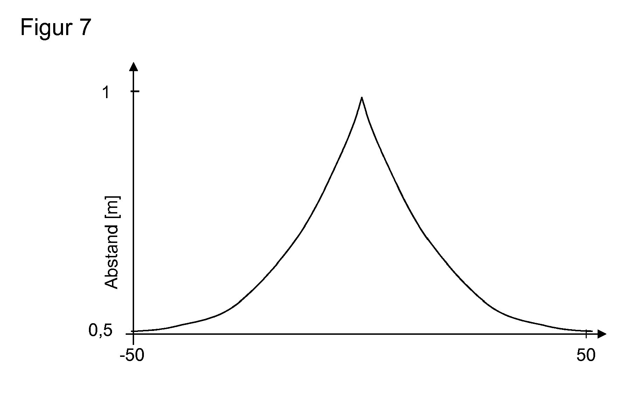

Dazu wird wie in Figur 7 gezeigt die Sendeleistung winkelabhängig angepasst, um die winkelabhängige Empfangsleistung zu kompensieren. Die Beleuchtung wirkt somit den Signalunterschieden entgegen und sorgt so für eine homogenere Lichtverteilung auf dem Bildsensor 9. Die meiste Energie der Beleuchtung sitzt dabei in der Mitte, wo der Abstand zwischen Bildsensor 9 und Randflächen 3a-3d maximal ist, und nimmt zu den Rändern hin ab. Eine solche Energieverteilung kann durch Optikdesign berechnet und in der Frontscheibe 15 oder einer eigenen Sendeoptik etwa als Freiformoptik realisiert werden.

Ein weiterer Effekt, welcher neben den soeben betrachteten Abständen der Randflächen 3a-3d die Dynamik beeinflusst, ist deren Remissionsvermögen. Hier ist eine alternative oder zusätzliche Kompensation durch Anpassung der Sendeleistung der Lichtquellen 7a, 7b beziehungsweise Anpassung der Integrationszeit des Bildsensors 9 möglich. Beispielsweise werden diese Parameter in einem Einlernvorgang so lange nachgeregelt, bis über den gesamten relevanten Winkelbereich ein ausreichendes Signal zur Verfügung steht.

Durch Anpassung der Sendeleistung beziehungsweise Integrationszeit können Dynamikfaktoren erheblich entspannt werden:
Hinsichtlich der Remissionsabhängigkeit muss ohne Anpassung das gesamte spezifizierte Intervall von beispielsweise 15%-100% Remissionsvermögen abgedeckt werden. Das entspricht einem Dynamikfaktor 100/15=6,67, der wie beschrieben praktisch eliminiert werden kann. Sollen noch dunklere Flächen mit Remission <15% oder Remission >100% bei teilweise gerichteter Rückstreucharakteristik erlaubt sein, wird der Dynamikfaktor sogar noch größer.

Hinsichtlich der Entfernungsabhängigkeit hängt der Gewinn erheblich von den zulässigen Geometrien und Ausdehnungen der Durchgangsöffnung 2 ab. Betrachtet man nur Quadrate mit beispielsweise minimal 0,4m und maximal 1,5m Kantenlänge, so ergibt sich eine kleinste Diagonale von 0,56m und eine größte Diagonale von 2,12m. Wegen der mit der Entfernung quadratischen Abnahme ergibt sich daraus ein Dynamikfaktor von 2,12^2 / 0,56^2 = 14, der bei größeren Reichweiten sogar noch deutlich zunimmt.

## Patentansprüche

1. Optoelektronische Vorrichtung zur Überwachung eines zumindest teilweise von Randflächen (3c, 3d) begrenzten Überwachungsbereichs (2), die ein Gehäuse mit einer Frontscheibe (15), eine Beleuchtungseinheit mit mindestens einer Lichtquelle (7a, 7b) zum Aussenden von Licht auf die Randflächen (3c, 3d), einen Bildsensor (9) zur Aufnahme von Bilddaten der Randflächen (3c, 3d) sowie eine Auswertungseinheit (11) zur Auswertung der Bilddaten aufweist, um Objekteingriffe (5) in den Überwachungsbereich (2) zu erkennen,
**dadurch gekennzeichnet,**
**dass** die Frontscheibe (15) als Sendeoptik der Beleuchtungseinheit derart geformt ist, dass das Licht (21 a, 21 b) der Lichtquellen (7a, 7b) in Längsrichtung zu einer Linienbeleuchtung aufgeweitet und in Querrichtung homogenisiert und dadurch die Beleuchtungseinheit derart ausgebildet ist, dass der Bildsensor (9) von den begrenzenden Randflächen (3c, 3d) ausreichend Licht empfängt, und dass die Frontscheibe (15) einen ersten Teilbereich (16a, 16b) mit einer ersten Grenzfläche (17a, 17b), der senkrecht zu der optischen Achse des Bildsensors (8, 9) steht und dagegen radial nach außen versetzt angeordnet ist, einen zweiten Teilbereich (19) mit einer zweiten Grenzfläche (20), der parallel zu dem ersten Teilbereich (16a, 16b) angeordnet, jedoch nicht radial nach außen versetzt ist, sowie mindestens einen schräg zu dem ersten Teilbereich (16a, 16b) stehenden Verbindungsbereich (18a, 18b) mit mindestens zwei weiteren Grenzflächen aufweist, der den ersten Teilbereich (16a, 16b) und den zweiten Teilbereich (19) verbindet, so dass durch mindestens zweifache interne Totalreflexion ein Parallelversatz der Sendelichtbündel entsteht, welcher die Sendestrahlachse näher an die Beobachtungsachse heranbringt und damit den Beobachtungswinkel verringert.

2. Optoelektronische Vorrichtung nach Anspruch 1,
wobei die Auswertungseinheit einen Objekteingriff anhand von Veränderungen eines von der Beleuchtungseinheit auf den Randflächen (3c, 3d) erzeugten Beleuchtungsmusters erkennt.

3. Optoelektronische Vorrichtung nach Anspruch 1 oder 2,
wobei die Randflächen (3c, 3d) eine rechteckige Öffnung (2) bilden und die Beleuchtungseinheit ein in einer Längsrichtung ausgedehntes Beleuchtungsmuster erzeugt, dessen Intensität über die Längsrichtung variiert, um unterschiedliche Entfernungen zu den Randflächen (3c, 3d) zu kompensieren.

4. Optoelektronische Vorrichtung nach Anspruch 3,
wobei die Intensität des Beleuchtungsmusters, bezogen auf die Längsrichtung, in der Mitte überhöht ist und zu den Seiten abfällt.

5. Optoelektronische Vorrichtung nach einem der Ansprüche 2 bis 4,
wobei die Intensität des Beleuchtungsmusters durch Anpassung der Sendeleistung mehrerer Lichtquellen (7a, 7b) und/oder durch Umverteilung mittels einer angepassten Sendeoptik über die Längsrichtung variiert wird.

6. Optoelektronische Vorrichtung nach einem der vorhergehenden Ansprüche,
wobei die Auswertungseinheit für einen Einlernmodus ausgebildet ist, in dem die Sendeleistung der Beleuchtungseinheit und/oder die Integrationszeit des Bildsensors (9) an die tatsächlich von den Randflächen (3c, 3d) empfangene Intensität angepasst wird.

7. Optoelektronische Vorrichtung nach einem der vorhergehenden Ansprüche,
wobei die Randflächen (3c, 3d) einen in einer Längsrichtung ausgedehnten und in einer Querrichtung schmalen Kontrastmusterstreifen (12) aufweisen, so dass die Auswertungseinheit (11) Objekteingriffe (5) in den Überwachungsbereich (2) anhand von Abschattungen des Kontrastmusterstreifens (12) erkennt.

8. Optoelektronische Vorrichtung nach einem der vorhergehenden Ansprüche,
wobei die erste Grenzfläche (17a, 17b) so geformt ist, dass in die Frontscheibe (15) eintretendes Licht (21 a, 21 b) der Lichtquellen (7a, 7b) kollimiert ist.

9. Optoelektronische Vorrichtung nach einem der vorhergehenden Ansprüche,
wobei die zweite Grenzfläche (20) so geformt ist, dass aus der Frontscheibe (15) austretendes Licht (21 a, 21 b) in Längsrichtung aufgeweitet ist.

10. Optoelektronische Vorrichtung nach Anspruch 9,
wobei die Frontscheibe (15) an der zweiten Grenzfläche (20) ein Zylinderlinsenarray aufweist.

11. Optoelektronische Vorrichtung nach einem der vorhergehenden Ansprüche,
wobei die Frontscheibe (15) einen Auskopplungsbereich für einen Testlichtstrahl zur Überwachung der Ausgangsleistung der Beleuchtungseinheit (7a, 7b) aufweist.

12. Anordnung einer optoelektronischen Vorrichtung nach einem der vorhergehenden Ansprüche an einer insbesondere rechteckigen Öffnung (2), wobei der Bildsensor (9) in einer Ecke der Öffnung (2) gegenüber den von dem Bildsensor (9) aufgenommenen Randflächen (3c, 3d) angeordnet ist.

## Claims

1. An optoelectronic apparatus for monitoring a monitored zone (2) bound at least partly by marginal surfaces (3c, 3d), the optoelectronic apparatus comprising a housing having a front screen (15), an illumination unit having at least one light source (7a, 7b) for the transmission of light to the marginal surfaces (3c, 3d), an image sensor (9) for the recording of image data of the marginal surfaces (3c, 3d) and an evaluation unit (11) for the evaluation of the image data in order to recognize object intrusions (5) in the monitored zone (2),
**characterized in that**
the front screen (15) is formed as a transmission optics of the illumination unit in such a way that the light (21 a, 21 b) of the light sources (7a, 7b) is widened in the longitudinal direction to a line illumination and is homogenized in the transverse direction and the illumination unit is thereby configured in such a way that the image sensor (9) receives sufficient light from the bounding marginal surfaces (3c, 3d) and **in that** the front screen (15) has a first part region (16a, 16b) having a first boundary surface (17a, 17b) that is perpendicular to the optical axis of the image sensor (8, 9) and is arranged radially outwardly displaced with respect thereto, has a second part region (19) having a second boundary surface (20) that is arranged in parallel with the first part region (16a, 16b), but is not displaced radially outwardly, and has at least one connection region (18a, 18b) with at least two further boundary surfaces, the connection region standing inclined with respect to the first part regions (16a, 16b) and connecting the first part region (16a, 16b) and the second part region (19) in such a way that a parallel shift of the transmitted light beam arises by an at least two-fold internal total reflection which parallel shift brings the transmitted beam axis closer to the monitoring beam axis and in this way reduces the monitoring angle.

2. An optoelectronic apparatus in accordance with claim 1, wherein the evaluation unit recognizes an object intrusion by means of changes of an illumination pattern generated by the illumination unit at the marginal surfaces (3c, 3d).

3. An optoelectronic apparatus in accordance with claim 1 or claim 2,
wherein the marginal surfaces (3c, 3d) form a rectangular opening (2) and the illumination unit generates an illumination pattern extended in a longitudinal direction whose intensity is varied over the longitudinal direction in order to compensate different distances from the marginal surfaces (3c, 3d).

4. An optoelectronic apparatus in accordance with claim 3,
wherein the intensity of the illumination pattern is super-elevated in the middle with respect to the longitudinal direction and declines towards the sides.

5. An optoelectronic apparatus in accordance with any one of the claims 2 to 4, wherein the intensity of the illumination pattern is varied by an adaption of the transmission power of a plurality of light sources (7a, 7b) and/or by redistribution over the longitudinal direction by means of an adapted transmission optics.

6. An optoelectronic apparatus in accordance with any one of the preceding claims, wherein the evaluation unit is configured for a teaching mode in which the transmission power of the illumination unit and/or the integration time of the image sensor (9) is adapted to the intensity actually received from the marginal surfaces (3c, 3d).

7. An optoelectronic apparatus in accordance with any one of the preceding claims, wherein the marginal surfaces (3c, 3d) have a contrast pattern strip (12) extended in a longitudinal direction and narrow in a transverse direction so that the evaluation unit (11) recognizes object intrusions (5) in the monitored zone (2) with reference to shadings of the contrast pattern strip (12).

8. An optoelectronic apparatus in accordance with any one of the preceding claims, wherein the first boundary surface (17a, 17b) is formed in such a way that light (21 a, 21 b) of the light sources (7a, 7b) incident into the front screen (15) is collimated.

9. An optoelectronic apparatus in accordance with any one of the preceding claims, wherein the second boundary surface (20) is formed in such a way that light (21 a, 21 b) exiting from the front screen (15) is widened in the longitudinal direction.

10. An optoelectronic apparatus in accordance with claim 9, wherein the front screen (15) has a cylinder lens array at the second boundary surface (20).

11. An optoelectronic apparatus in accordance with any one of the preceding claims, wherein the front screen (15) has a decoupling region for a test light beam for monitoring the output power of the illumination unit (7a, 7b).

12. An arrangement of an optoelectronic apparatus in accordance with one of the preceding claims at an in particular rectangular opening (2), wherein the image sensor (9) is arranged in a corner of the opening (2) opposite the marginal surfaces (3c, 3d) recorded by the image sensor (9).

## Revendications

1. Dispositif optoélectronique pour la surveillance d'une zone de surveillance (2) délimitée au moins partiellement par des surfaces de bordure (3c, 3d), qui comprend un boîtier avec une plaque frontale (15), une unité d'éclairage avec au moins une source de lumière (7a, 7b) pour émettre de la lumière vers les surfaces de bordure (3c, 3d), un capteur d'image (9) pour enregistrer des données image des surfaces de bordure (3c, 3d) ainsi qu'une unité d'évaluation (11) pour évaluer les données image, afin de reconnaître des interventions d'objets (5) dans la zone de surveillance (2),
**caractérisé en ce que** la plaque frontale (15) est formée à titre d'optique d.'émission de l'unité d'éclairage de telle façon que la lumière (21a, 21b) des sources de lumière (7a, 7b) est élargie en direction longitudinale pour donner un éclairage linéaire, et est homogénéisée en direction transversale et de ce fait l'unité d'éclairage est réalisée de telle façon que le capteur d'image (9) reçoit des surfaces de bordure limitrophes (3c, 3d) suffisamment de lumière, et **en ce que** la plaque frontale (15) comprend une première zone partielle (16a, 16b) avec une première surface limite (17a, 17b), qui est perpendiculaire à l'axe optique du capteur d'image (8, 9) et qui est agencée en décalage radial vers l'extérieur par rapport à celui-ci, une seconde zone partielle (19) avec une seconde surface limite (20), qui est agencée parallèlement à la première zone partielle (16a, 16b), mais qui n'est pas décalée radialement vers l'extérieur, ainsi qu'au moins une zone de liaison (18a, 18b), disposée en oblique par rapport à la première zone partielle (16a, 16b) avec au moins deux autres surfaces limite, qui relient la première zone partielle (16a, 16b) et la seconde zone partielle (19), de sorte qu'il en résulte, par au moins double réflexion totale interne, un décalage parallèle du faisceau de lumière émise, qui rapproche l'axe du rayon émis vers l'axe d'observation, et réduit par conséquent l'angle d'observation.

2. Dispositif optoélectronique selon la revendication 1,
dans lequel l'unité d'évaluation reconnaît une intervention d'objets au moyen de modifications d'un motif d'éclairage engendré par l'unité d'éclairage sur les surfaces de bordure (3c, 3d).

3. Dispositif optoélectronique selon la revendication 1 ou 2,
dans lequel les surfaces de bordure (3c, 3d) forment une ouverture rectangulaire (2), et l'unité d'éclairage engendre un motif d'éclairage étendu en direction longitudinale, dont l'intensité varie sur la direction longitudinale, afin de compenser des éloignements différents vis-à-vis des surfaces de bordure (3c, 3d).

4. Dispositif optoélectronique selon la revendication 3,
dans lequel l'intensité du motif d'éclairage, par référence à la direction longitudinale, est surélevée au milieu et chute vers les côtés.

5. Dispositif optoélectronique selon l'une des revendications 2 à 4,
dans lequel l'intensité du motif d'éclairage est variée par adaptation de la puissance d'émission de plusieurs sources de lumière (7a, 7b) et/ou par modification de la répartition sur la direction longitudinale au moyen d'une optique d'émission adaptée.

6. Dispositif optoélectronique selon l'une des revendications précédentes,
dans lequel l'unité d'évaluation est réalisée pour un mode d'apprentissage dans lequel la puissance d'émission de l'unité d'éclairage et/ou le temps d'intégration du capteur d'image (9) est adapté à l'intensité effectivement reçue par les surfaces de bordure (3c, 3d).

7. Dispositif optoélectronique selon l'une des revendications précédentes,
dans lequel les surfaces de bordure (3c, 3d) comprennent un ruban de motif contrasté (12), allongé en direction longitudinale et étroit en direction transversale, de sorte que l'unité d'évaluation (11) reconnaît des interventions d'objets (5) dans la zone de surveillance (2) au moyen d'ombrages du ruban de motif contrasté (12).

8. Dispositif optoélectronique selon l'une des revendications précédentes,
dans lequel la première surface limite (17a, 17b) est formée de telle façon que la lumière (21a, 21b) des sources de lumière (7a, 7b) qui entre dans la plaque frontale (15) est collimatée.

9. Dispositif optoélectronique selon l'une des revendications précédentes,
dans lequel la seconde surface limite (20) est formée de telle façon que la lumière (21a, 21 b) qui sort de la plaque frontale (15) est étendue en direction longitudinale.

10. Dispositif optoélectronique selon la revendication,
dans lequel la plaque frontale (15) comprend un réseau de lentilles cylindrique sur la seconde surface limite (20).

11. Dispositif optoélectronique selon l'une des revendications précédentes, dans lequel la plaque frontale (15) comprend une zone de découplage pour un rayon de lumière test destiné à la surveillance de la puissance de sortie de l'unité d'éclairage (7a, 7b).

12. Agencement d'un dispositif optoélectronique selon l'une des revendications précédentes sur une ouverture (2), en particulier rectangulaire, dans lequel le capteur d'image (9) est agencé dans un coin de l'ouverture (2) à l'opposé des surfaces de bordure (3c, 3d) prises par le capteur d'image (9).
